# FASCICULE DE BREVET EUROPEEN

(11) **EP 0 520 881 B1**
(45) Date de publication et mention de la délivrance du brevet: **09.08.1995**
(21) Numéro de dépôt: 92401768.4
(22) Date de dépôt: 24.06.1992
(51) Int. Cl.: F16F 1/22, F16F 1/26, B60K 5/12

(54) **Bras de suspension d'organe vibrant, en particulier de moteur à combustion interne pour véhicule**
Aufhängungsarm für eine schwingende Anlage, insbesondere für eine Fahrzeugbrennkraftmaschine
Suspension arm of a vibrating component, in particulier of an internal combustion engine for a vehicle

(30) Priorité: 27.06.1991 FR 9107973
(43) Date de publication de la demande: 30.12.1992
(73) Titulaire: HUTCHINSON, F-75008 Paris (FR)
(72) Inventeur: Noe, Frédéric, F-45100 Orleans (FR); Domer, Michel, F-60790 Valdampierre (FR)
(74) Mandataire: Picard, Jean-Claude Georges

(56) Documents cités:
- EP-A- 0 418 134
- FR-A- 619 686
- FR-A- 2 243 371
- US-A- 3 430 901
- US-A- 3 730 509
- PATENT ABSTRACTS OF JAPAN vol. 5, no. 101 (M-76)(773) 30 Juin 1981

## Description

La présente invention concerne un bras de suspension d'organe vibrant, en particulier de moteur à combustion interne pour véhicule, ce bras, fixé par une extrémité audit organe vibrant et par son extrémité opposée à un châssis, devant avoir une faible raideur en flexion dans deux directions (x, z) mutuellement perpendiculaires, et une forte raideur en compression et en traction dans la direction (y) perpendiculaire aux deux précédentes, au moins après un début de déplacement d'amplitude limitée.

Actuellement ces bras sont en métal rigide, et l'élasticité souhaitable de la liaison entre l'organe vibrant et un châssis fixe, par exemple entre le moteur à combustion interne d'un véhicule et son châssis, est obtenue grâce à un bloc élastique dans toutes les directions, en caoutchouc ou analogue, interposé par exemple entre ledit châssis et l'extrémité correspondante dudit bras de suspension.

L'inconvénient de ce type de dispositif réside dans son coût élevé et dans le fait que la liaison est élastique dans toutes les directions, alors qu'il peut être au contraire souhaitable qu'elle présente une certaine raideur dans une direction déterminée. En outre, le caoutchouc a une tenue limitée en température, et est sujet au fluage, ce qui constitue un important inconvénient dans un moteur.

Le but de la présente invention est de remédier à tous ces inconvénients, et à cet effet un bras de suspension conforme à l'invention est essentiellement caractérisé en ce qu'il comprend une lame de matériau composite s'étendant généralement dans la troisième direction citée (y) et dont la section est aplatie aux deux extrémités de fixation selon deux plans orthogonaux entre eux, de telle sorte que son épaisseur (e) se mesure, à l'une desdites extrémités dans la première (x) des directions précitées, et à l'autre extrémimité dans la seconde (z) desdites directions, la surface de la section droite de ladite lame étant constante sur toute la longueur de la lame.

En tant que matière composite on pourra utiliser toute matière convenant habituellement à ce type d'application, par exemple une résine synthétique incorporant des fibres d'un matériau à haut module d'élasticité tel que le verre, le carbone et analogues.

Le bras métallique habituel est donc supprimé et remplacé par un bras élastique à caractéristiques élastiques différentes selon les directions dans lesquelles s'exercent les efforts. On réalise donc par suite une économie de matière, on évite le fluage inhérent au caoutchouc, et l'on peut facilement donner au bras des caractéristiques élastiques optimales dans toutes les directions, comme cela a été défini plus haut.

Avantageusement, les extrémités aplaties de ladite lame sont encastrées chacune dans un bloc de matériau élastique maintenu par une armature métallique rigide apte à être fixée respectivement sur ledit organe vibrant et sur ledit châssis.

Cette disposition évite que la lame en matériau composite ne subisse à ses extrémités des contraintes de cisaillement excessives et une usure au cours du temps.

Les épaisseurs desdites extrémités aplaties de ladite lame peuvent être différentes l'une de l'autre pour conférer aux extrémités de la lame des raideurs en flexion différentes.

Deux modes de réalisation de l'invention vont maintenant être décrits à titre d'exemples nullement limitatifs, avec référence aux figures du dessin annexé dans lequel :
- la figure 1 est une vue en perspective d'un premier mode de réalisation du bras de suspension ; et
- les figures 2 et 3 sont des vues respectivement en élévation et en plan de ce bras.

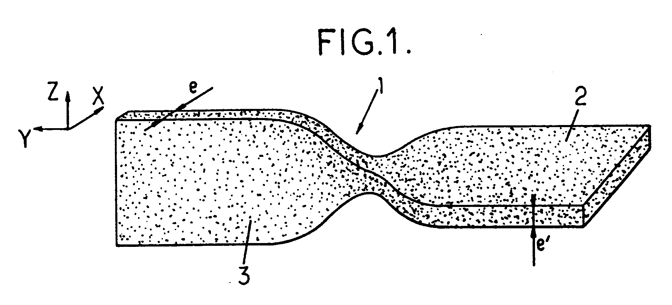

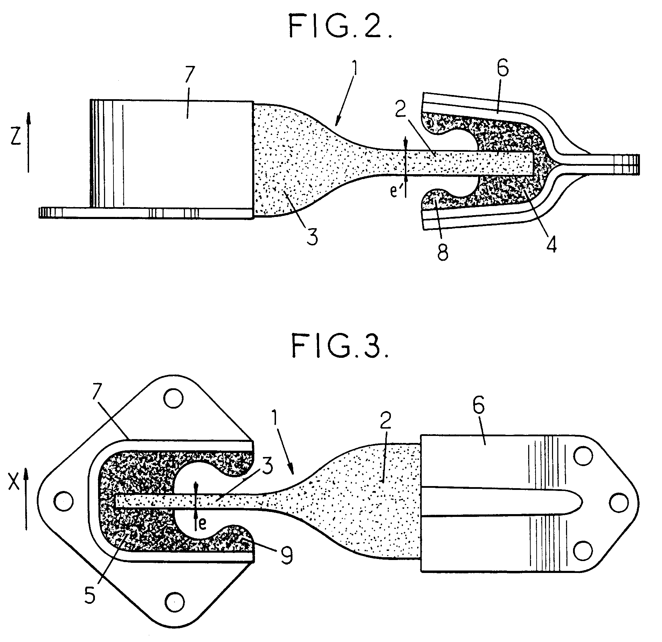

Sur les différentes figures la lame en matériau composite est référencée 1. Sur la figure 1 on a représenté les directions de référence x, y, z en système orthonormé. On voit que la direction générale de la lame est la direction y, dans laquelle elle présente une grande raideur en traction et en compression. Il pourra s'agir de la direction longitudinale ou transversale d'un véhicule, dans le cas de la suspension d'un moteur, selon qu'il est souhaitable d'avoir une grande raideur de cette suspension dans l'une ou l'autre de ces directions. Dans les deux autres directions, horizontale x et verticale z, la lame devra avoir au contraire une faible raideur en flexion pour absorber au maximum les vibrations. Ceci est obtenu par les aplatissements 2 et 3 prévus aux extrémités de la lame 1, ces aplatissements étant effectués selon deux plans orthogonaux. On voit sur le dessin qu'à son extrémité gauche l'épaisseur e de la lame se mesure selon la direction x, et qu'à son extrémité droite l'épaisseur e' se mesure selon la direction z. Les épaisseurs e et e' peuvent d'ailleurs être différentes, comme visible sur les figures 2 et 3. De la sorte, on peut obtenir des raideurs Kx et Kz différentes : par exemple Kx = 50 N/mm, et Kz = 150 N/mm, si e' > e. Une telle lame en matériau composite peut être facilement obtenue par moulage.

Quel que soit le mode de réalisation, il est préférable d'encastrer les extrémités 2 et 3 de la lame 1 dans des blocs de caoutchouc ou d'élastomère, respectivement 4 et 5, comme ceci est représenté aux figures 2 et 3. Ces blocs sont adhérisés à l'intérieur d'armatures métalliques rigides, respectivement 6 et 7, aptes à être fixées respectivement sur le moteur ou autre organe vibrant, et sur un châssis. Ces blocs comportent en 8 et 9 des butées propres à limiter les débattements de la lame 1 verticalement du côté de l'extrémité 2, horizontalement du côté de l'extrémité 3.

## Revendications

1. Bras de suspension d'organe vibrant, en particulier de moteur à combustion interne pour véhicule, ce bras, fixé par une extrémité audit organe vibrant et par son extrémité opposée à un châssis, devant avoir une faible raideur en flexion dans deux directions (x, z) mutuellement perpendiculaires, et une forte raideur en compression et en traction dans la direction (y) perpendiculaire aux deux précédentes, au moins après un début de déplacement d'amplitude limitée, caractérisé en ce qu'il comprend une lame (1) de matériau composite s'étendant généralement dans la troisième direction citée (y) et dont la section, dont la forme est variable d'une extrémité à l'autre, est aplatie aux deux extrémités (2, 3) de fixation selon deux plans orthogonaux entre eux, de telle sorte que son épaisseur (e) se mesure, à l'une (3) desdites extrémités dans la première (x) des directions précitées, et à l'autre (2) extrémité dans la seconde (z) desdites directions, la surface de la section droite de ladite lame (1) étant constante sur toute la longueur de la lame.

2. Bras selon la revendication 1, caractérisé en ce que les extrémités aplaties (2, 3) de ladite lame (1) sont encastrées chacune dans un bloc de matériau élastique (4, 5) maintenu par une armature métallique rigide (6, 7) apte à être fixée respectivement sur ledit organe vibrant et sur ledit châssis.

3. Bras selon la revendication 1 ou 2, caractérisé en ce que les épaisseurs (e, e') desdites extrémités (3, 2) aplaties de ladite lame sont différentes l'une de l'autre.

4. Bras selon l'une quelconque des revendications précédentes, caractérisé en ce que ladite lame (1) de matériau composite est réalisée par moulage.

## Claims

1. Arm for suspending a vibrating component, in particular of an internal combustion engine for a vehicle, this arm, fixed at one end to the said vibrating component and at its other end to a chassis, needing to have low stiffness under flexion in two mutually perpendicular directions (x, z), and high stiffness under compression and traction in the direction (y) perpendicular to the previous two, at least after an onset of movement of limited amplitude, characterised in that it comprises a blade (1) made of a composite material extending overall in the third direction cited (y) and whose cross section, the shape of which is variable from one end to the other, is flattened at the two fixing ends (2, 3) along two mutually orthogonal planes, so that its thickness (e) is measured at one (3) of the said ends in the first (x) of the aforementioned directions, and at the other (2) end in the second (z) of the said directions, the surface area of the cross section of the said blade (1) being constant over the whole length of the blade.

2. Arm according to Claim 1, characterised in that the flattened ends (2, 3) of the said blade (1) are each embedded in a block of elastic material (4, 5) held by a rigid metal fitting (6, 7) suitable for being fixed respectively to the said vibrating component and to the said chassis.

3. Arm according to Claim 1 or 2, characterised in that the thicknesses (e, e') of the said flattened ends (3, 2) of the said blade are different from each other.

4. Arm according to any one of the preceding claims, characterised in that the said blade (1) of composite material is produced by moulding.

## Patentansprüche

1. Aufhängungsarm einer schwingenden Anlage, insbesondere eines Verbrennungsmotors für Fahrzeuge, wobei dieser Arm, der mit einem Ende an der schwingenden Anlage und mit seinem entgegengesetzten Ende an einem Rahmen befestigt ist, eine geringe Biegefestigkeit in zwei zueinander rechtwinklig verlaufenden Richtungen (x, z) und eine hohe Druck- und Zugfestigkeit in der rechtwinklig zu den vorangegangenen Richtungen verlaufenden Richtung (y) aufweist, zumindest nach einer Anfangsauslenkung begrenzter Amplitude, dadurch gekennzeichnet, daß er eine Platte (1) aus Verbundmaterial enthält, die sich im wesentlichen in der zuletzt genannten Richtung (y) erstreckt und deren Querschnitt, dessen Form zwischen den beiden Enden variabel ist, an den beiden Befestigungsenden (2, 3) in zwei rechtwinklig zueinander verlaufenden Ebenen abgeflacht ist, und zwar so, daß sich seine Dicke (e) an einem (3) der genannten Enden in der ersten (x) der genannten Richtungen und am anderen Ende (2) in der zweiten der genannten Richtungen (z) erstreckt, wobei die rechtwinklige Querschnittsfläche der Platte (1) über die gesamte Länge der Platte konstant ist.

2. Arm nach Anspruch 1, dadurch gekennzeichnet, daß die beiden abgeflachten Enden (2, 3) der Platte (1) jeweils in einem Block aus elastischem Material (4, 5) eingefügt sind, der von einer steifen Metallummantelung (6, 7) gehalten wird, die jeweils an der schwingenden Anlage bzw. dem Rahmen befestigt werden kann.

3. Arm nach Anspruch 1 oder 2, dadurch gekennzeichnet, daß die abgeflachten Enden (3, 2) der Platte sich in ihrer Dicke (e, e') unterscheiden.

4. Arm nach einem der vorangegangenen Ansprüche, dadurch gekennzeichnet, daß die Platte (1) aus Verbundmaterial in einem Gußverfahren hergestellt wird.
